# EUROPÄISCHE PATENTSCHRIFT

(11) **EP 0 448 939 B1**
(45) Veröffentlichungstag und Bekanntmachung des Hinweises auf die Patenterteilung: **02.11.1994**
(21) Anmeldenummer: 91101654.1
(22) Anmeldetag: 07.02.1991
(51) Int. Cl.: H02G 3/04, H01B 7/18

(54) **Scheuerschutz für elektrische Leitungen**
Abrasion protection for electrical wires
Protection contre le frottement pour conducteurs électriques

(30) Priorität: 13.03.1990 DE 4007886
(43) Veröffentlichungstag der Anmeldung: 02.10.1991
(73) Patentinhaber: Daimler-Benz Aerospace Airbus Gesellschaft mit beschränkter Haftung, 21129 Hamburg (DE)
(72) Erfinder: Kirma, Safa, W-2000 Wedel/Holstein (DE)
(74) Vertreter: Hansmann, Dierk, Dipl.-Ing.

(56) Entgegenhaltungen:
- EP-A- 0 117 057
- EP-A- 0 397 063
- US-A- 1 710 312

## Beschreibung

Die Erfindung bezieht sich auf einen Scheuerschutz.

Durch die Druckschrift EP 0 397 063 A2 (Stand der Technik nach Artikel 54(3) EPÜ) ist eine Einrichtung zum Schutz elektrischer Anlagen gegen elektromagnetische Störungen, insbesondere Überspannungen und Blitzeinwirkungen, in Form metallischer Profilschläuche, die die zwischen den einzelnen elektrischen Geräten verlegten Leitungen umgeben und die elektrisch leitend mit Ableitpunkten verbunden sind, bekanntgeworden, wobei die Anschlußelemente jeweils mit einer Buchse zur Aufnahme des Profilschlauches sowie mit einem Spannelement zur Fixierung des Profilschlauches versehen sind, und zwischen dem Profilschlauch und den Leitungen ein Kunststoffgeflecht als Scheuerschutz angeordnet ist.

Dabei bildet das Kunststoffgeflecht einen wirksamen Scheuerschutz, ohne den sich die Isolier-Ummantelungen der Leitungen, insbesondere bei Auftreten von Vibrationen, an den metallischen Wülsten des Schlauches reiben würden, was zu Beschädigungen der Leitungen führen könnte. Fertigungstechnisch kann das Geflecht nur dann verwendet werden, wenn aus dem fertig angelieferten Geflecht zuvor Zuschnitte von entsprechender Länge angefertigt werden. Dabei zeigt sich, daß die einzelnen Fasern des Geflechtes infolge innerer Vorspannungen an den Schnittflächen zum Entflechten neigen. Dies erfordert besondere Maßnahmen zur Vermeidung des Entflechtens. Da ein Zusammenschieben des Geflechts sofort zu einem Anwachsen des Geflechtdurchmessers führt, ist es nicht möglich, das Geflecht in die Profilschläuche einzuschieben. Vielmehr ist ein Einbringen des Geflechtes in einen Profilschlauch nur durch Einziehen möglich. Weiterhin hat sich gezeigt, daß sich die einzelnen Kunststoffe, aus denen das Geflecht bestehen kann, unter thermischer Belastung unterschiedlich verhalten. So ergeben sich bei üblichen Thermoplasten bereits ab Temperaturen um 100° C deutliche Rückgänge der Festigkeit.

Demgemäß liegt der Erfindung die Aufgabe zugrunde, eine gattungsgemäße Einrichtung derart weiterzubilden, daß sich der Scheuerschutz leicht in den Fertigungsprozeß einfügen läßt, wobei die Herstellkosten der Leitungen wesentlich reduziert werden.

Diese Aufgabe wird durch die Merkmale des Patentanspruchs 1 gelöst.

Dabei ist insbesondere von Vorteil, daß sich der Zusammenbau der Einrichtung reibungslos in einen serienmäßigen Fertigungsprozeß einfügt.

Vorteilhafte Weiterbildungen der Erfindung sind in den Ansprüchen 2 bis 7 angegeben.

Die Erfindung ist anhand der Zeichnung dargestellt und nachfolgend näher erläutert. Es zeigen
- Fig. 1: einen verzweigten Kabelbaum mit einer Abschirmung und
- Fig. 2: die Einzelheit II nach Fig. 1.

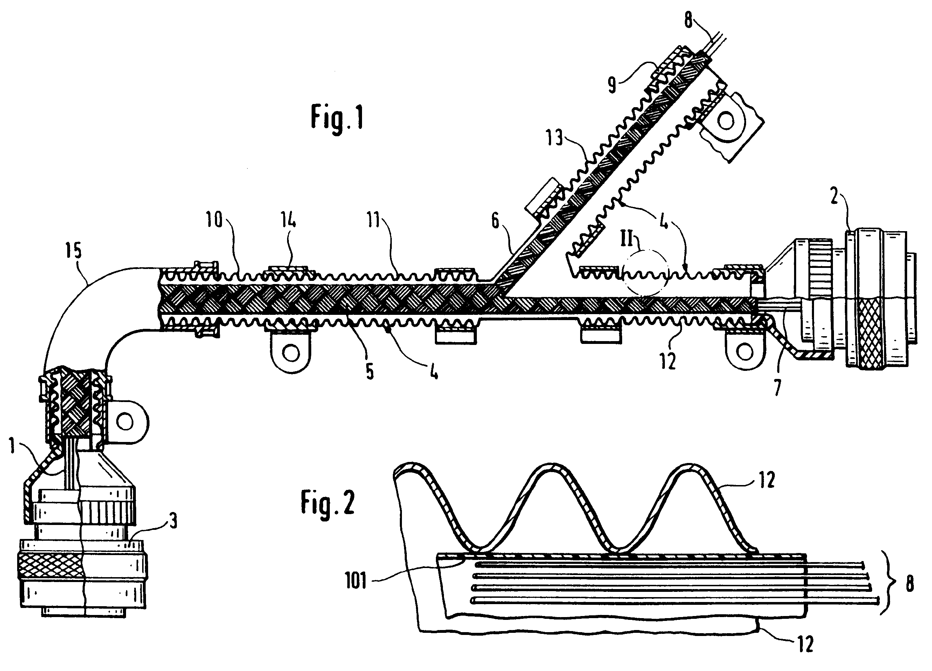

Fig. 1 zeigt schematisch einen Kabelbaum 1, der an zwei Enden mit Anschlußelementen 2 und 3 versehen ist. Der Kabelbaum besteht aus einer Vielzahl von zu einem Strang zusammengefaßter elektrischer Leitungen. In der gezeigten Beispielausführung dient der Kabelbaum zum Verbinden hier nicht gezeigter Geräte eines elektrischen Systems in einem Flugzeug. Als Schutz gegen elektromagnetische Störungen, vor allem gegen Überspannungen, wie sie insbesondere als Folge von Blitzeinschlägen auftreten können, ist der Kabelbaum 1 von einer Abschirmung umgeben, die aus einem flexiblen metallischen Profilschlauch 4 besteht. Anhand eines Verzweigungselementes 6 ist der Kabelbaum 1 in zwei getrennt verlaufende abgeschirmte Teilstränge 7 und 8 aufgeteilt, wobei der Profilschlauch des Teilstranges 8 an seinem Ende mittels eines als Schelle ausgebildeten Spannelementes 9 fixiert und mit Masse verbunden ist. Der Profilschlauch 4 ist aus mehreren Teilelementen 10, bis 13 zusammengesetzt, wovon die Elemente 10 und 11 mittels eines Spannelementes 14 zusammengehalten werden. Das Teilelement 10 des Profilschlauches 4 ist nahe dem Anschlußelement 3 mittels eines Formteils 15 um 90° abgewinkelt.

Fig. 2 zeigt die Einzelheit II nach Fig. 1. Hier erscheint die Wandstärke des Profilschlauches 12 in vergrößerter Darstellung. Weiterhin zeigt das Bild einige Leitungen 8 und einen zwischen dem Profilschlauch 12 und den Leitungen 8 angeordneten Scheuerschutz 101. Der Scheuerschutz 101 ist als Schlauch ausgebildet. Hierdurch ist sichergestellt, daß sich die Leitungen 8 leicht in den zuvor mit dem Scheuerschutz 101 versehenen Profilschlauch 12 einschieben oder einziehen lassen. In einer bevorzugten Ausgestaltung der Erfindung ist der Scheuerschutz 101 aus einem geeigneten Fasermaterial hergestellt wobei sein Durchmesser so stabilisiert ist, daß dieser von möglicherweise auftretenden Längskräften weitgehend unabhängig ist. Da die Einrichtung auch bei höheren Temperaturen funktionsfähig sein soll, kommen insbesondere Glas-, Keramik-, und Mineral-Fasern als Werkstoffe in Betracht.

Bei einem aus Fasermaterial bestehenden schlauchförmigen Scheuerschutz 101 kann die erforderliche Stabilisierung des Durchmessers dadurch erreicht werden, daß die Fasern oder Faserstränge durch entsprechende textiltechnische Maßnahmen miteinander verbunden sind. Dies kann beispielsweise durch Stricken oder Weben erfolgen.

Ein einfaches schlauchförmiges Geflecht, das an sich einen instabilen Durchmesser aufweist, kann dadurch einen vorbestimmten festen Durchmesser erhalten, daß der betreffende Faserschlauch mit einem geeigneten Bindemittel, beispielsweise mit Silikonkautschuk, imprägniert wird. Silikonkautschuk zeichnet sich durch eine hervorragende Temperaturbeständigkeit aus.

Der Scheuerschutz 101 weist zweckmäßig gegenüber den Leitungen 8 und dem Profilschlauch 12 einen niedrigen Reibwert auf. Es ist daher vorgesehen, daß der Faserschlauch mit einem Bindemittel imprägniert wird, das einen niedrigen Reibwert aufweist.

Falls für die Materialauswahl weniger das Temperaturverhalten als vielmehr Kostenerwägungen eine Rolle spielen, können anstelle der vorgenannten temperaturbeständigen Fasern auch übliche Textilfasern bzw. Synthetikfasern verwendet werden.

Es ist auch denkbar, daß als Scheuerschutz 101 ein geeigneter Kunststoffschlauch verwendet wird. Auch hierbei besteht die Möglichkeit, je nach Anforderung zweckmäßige Materialien auszuwählen. Hierbei besteht eine denkbare Ausgestaltung darin, daß der Scheuerschutz 101 als Schrumpfschlauch ausgebildet ist.

## Patentansprüche

1. Scheuerschutz für eine Einrichtung zum Schutz elektrischer Anlagen gegen elektromagnetische Störungen, insbesondere Überspannungen und Blitzeinwirkungen, in Form metallischer Profilschläuche, welche die zwischen einzelnen elektrischen Geräten verlegten Leitungen umgeben und die elektrisch leitend mit Ableitpunkten verbunden sind, wobei Anschlußelemente vorgesehen sind, die jeweils eine Buchse zur Aufnahme des Profilschlauches sowie ein Spannelement zur Fixierung des Profilschlauches aufweisen, mit folgenden Merkmalen:
a. der Scheuerschutz (101) ist zwischen dem Profilschlauch (12) und den Leitungen (8) angeordnet und ist
b. als aus Fasersträngen bestehender Schlauch ausgebildet,
c. die Faserstränge sind durch Stricken oder Weben miteinander verbunden, und der Faserschlauch ist
d. mit einem Bindemittel, wie Silikonkautschuk, imprägniert.

2. Scheuerschutz nach einem der Ansprüche 1 bis 4, dadurch **gekennzeichnet**, daß der Faserschlauch mit einem Bindemittel imprägniert wird, das einen niedrigen Reibwert aufweist.

3. Scheuerschutz nach einem der Ansprüche 1 bis 5, dadurch **gekennzeichnet**, daß der Scheuerschutz (101) als Kunststoffschlauch ausgebildet ist.

4. Scheuerschutz nach einem der Ansprüche 1 bis 6, dadurch **gekennzeichnet**, daß der Scheuerschutz (101) als Schrumpfschlauch ausgebildet ist.

## Claims

1. Protection against chafing for an arrangement for protecting electrical installations against electromagnetic disturbances, particularly overvoltages and the effects of lightning, in the form of metal profiled hoses which surround the conductors laid between individual electrical devices and are connected so as to be electrically conductive to diversion points, wherein connecting elements are provided which in each case have a sleeve to receive the profiled hose as well as a gripping element to fix the profiled hose, with the following features:
a) the protection against chafing (101) is disposed between the profiled hose (12) and the conductors (8) and is
b) constructed as a hose made from fibre strands,
c) the fibre strands are connected to one another by knitting or weaving, and the fibre hose is
d) impregnated with a binder, such as silicone rubber.

2. Protection against chafing according to one of Claims 1 to 4, characterised in that the fibre hose is impregnated with a binder which has a low coefficient of friction.

3. Protection against chafing according to one of Claims 1 to 5, characterised in that the protection against chafing (101) is constructed as a plastic hose.

4. Protection against chafing according to one of Claims 1 to 6, characterised in that the protection against chafing (10) is constructed as a shrink-fit hose.

## Revendications

1. Protection contre l'abrasion pour une installation servant à protéger des équipements électriques contre des parasites électromagnétiques, notamment des surtensions et des coups de foudre, sous la forme de tubes profilés, métalliques qui entourent les câbles reliant différents appareils électriques et qui sont reliés en conduction électrique avec des points d'évacuation, des éléments de branchement étant prévus, comprenant chaque fois une douille pour recevoir le tube profilé ainsi qu'un élément de serrage pour bloquer le tube profilé, ayant les caractéristiques suivantes :
a) la protection contre l'abrasion (101) est prévue entre le tube profilé (12) et les câbles (8) et
b) cette protection est en forme de tube constitué de cordons de fibres,
c) les cordons de fibres sont reliés par tricotage ou tissage et
d) le tube de fibres est imprégné d'un liant tel que du caoutchouc siliconé.

2. Protection contre l'abrasion selon la revendication 1, caractérisée en ce que le tube de fibres est imprégné d'un liant ayant un faible coefficient de frottement.

3. Protection contre l'abrasion selon l'une des revendications 1 à 2, caractérisée en ce que la protection contre l'abrasion (101) est un tube en caoutchouc.

4. Protection contre l'abrasion selon la revendication 1, caractérisée en ce que la protection contre l'abrasion (101) est un tube rétracté.
